# EUROPEAN PATENT SPECIFICATION

(11) **EP 2 193 983 B1**
(45) Date of publication and mention of the grant of the patent: **09.01.2013**
(21) Application number: 09177601.3
(22) Date of filing: 01.12.2009
(51) Int. Cl.: B62D 27/06, B62D 49/06, A01D 34/64

(54) **Frame for tractor mower**
Rahmen für Aufsitzmäher
Châssis pour tondeuse autoportée

(30) Priority: 03.12.2008 IT MI20080397 U
(43) Date of publication of application: 09.06.2010
(73) Proprietor: GGP Italy S.p.A., 31033 Castelfranco Veneto (TV) (IT)
(72) Inventor: Ferrari, Simone, 31022, PREGANZIOL (TV) (IT)
(74) Representative: Mittler, Enrico

(56) References cited:
- US-A- 2 848 859
- US-A- 4 120 136

## Description

The present invention concerns a frame for tractor mower.

The model presented hereinbelow stems from consideration of the tractor mower frames already on the market. In particular, reference is made to the supporting or central frame of the tractor, to which are fitted in various ways all the operating units of the tractor, such as the motor unit, the tank, the seat, the forecarriage and the front wheels, the drive and rear wheels, the steering, the cutting plate, the hood panelling, the dashboard and controls, the platforms, etc.

Tractor mower frames are known, in particular of two types: the European type and the American type,

In the European type of supporting frame for tractors, the central frame consists of two rectangular or round-section longitudinal members, and therefore with closed section, and on said longitudinal members are welded plates and supports for securing structural and functional units by means of anti-unscrewing screws, nuts and washers. This frame has good rigidity characteristics. Nevertheless, it consists of many welded component parts and is therefore heavy and uneconomical.

The American type of supporting frame is totally or prevalently made of pressed steel plate, e.g., at the front of pressed plate, at the rear of welded structures. This type of frame is not rigid enough in some structurally decisive areas such as the motor and forecarriage fastening area, with consequent increase in the vibrations and excessive play of the forecarriage-steering assembly after a few hours of operation. It is however more economical and more lightweight than a European type supporting structure with welded longitudinal members and supports.

US-2848859 discloses a lawn mower with adjustable wheel mounting assembly: its disclosure covers the preamble features of claim 1.

The object of the present invention is to make a frame for tractor mower with good rigidity characteristics, with reduced number of welded components, more economical, less heavy and of simpler construction.

According to the invention, such object is achieved by means of a supporting frame for tractor mower as disclosed in claim 1.

These and other characteristics of the present invention will be made clearer by the following detailed description of a practical embodiment thereof illustrated by way of non-limiting example in the attached drawings, in which:
the figure 1 shows a view from above of a frame for assembled tractor mower;
the figure 2 shows a section view of figure 1 according to the line II-II;
the figure 3 shows a section view of figure 1 according to the line III-III;
the figure 4 shows an enlargement of a portion of figure 2 enclosed in the circle W;
the figure 5 shows an enlargement of a portion of figure 3 enclosed in the circle Y;
the figure 6 shows an enlargement of a portion of figure 1 enclosed in the circle Z;
the figure 7 shows a side view of the frame for assembled tractor mower;
the figure 8 shows a view from behind of the frame for assembled tractor mower;
the figure 9 shows a section view of figure 7 according to the line IX-IX;
the figure 10 shows a section view of figure 7 according to the line X-X;

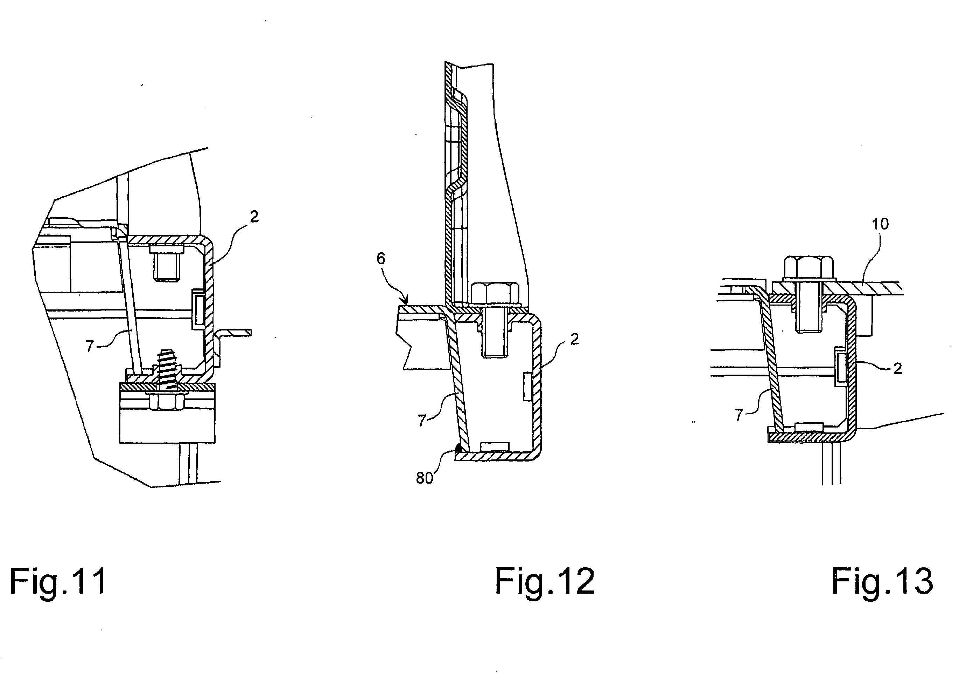

the figure 11 shows a section view of figure 7 according to the line XI-XI;
the figure 12 shows a section view of figure 7 according to the line XII-XII;
the figure 13 shows a section view of figure 7 according to the line XIII-XIII.

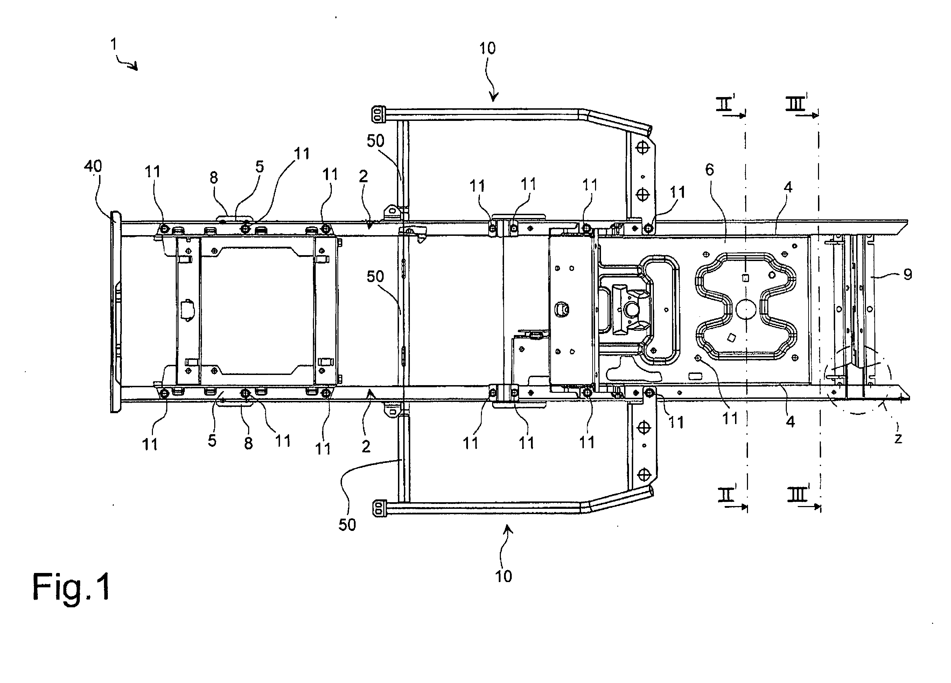

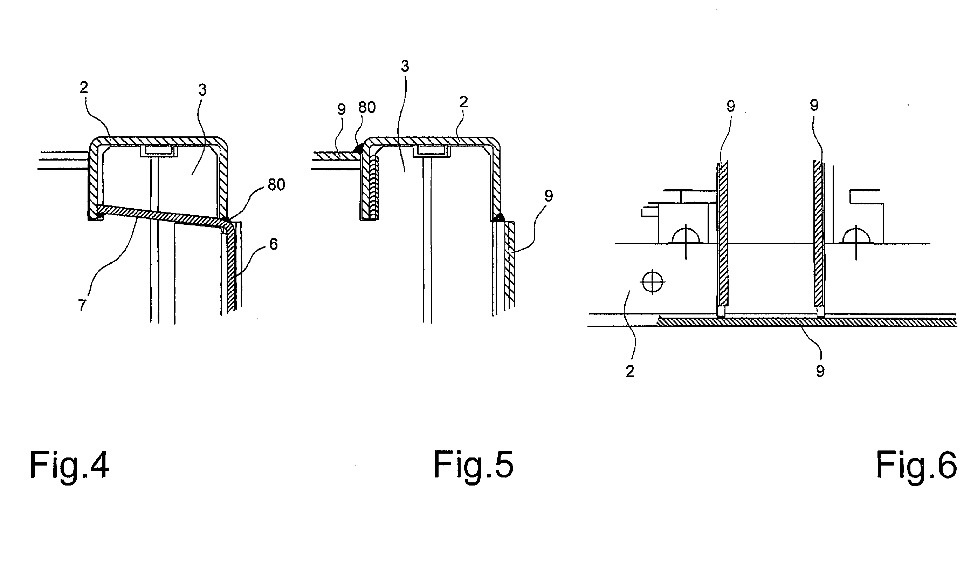

With reference now to the attached illustrations, and in particular to the figures 1, 2, 4, a supporting frame 1 can be seen for a tractor mower (not shown), made up of two parallel longitudinal members 2 with a C-shaped open section 3 (figure 4). The C-shaped open section 3 has been chosen by way of example and it is clear that the type of assembly described here can be applied mutatis mutandis to every open section whose profile proves more suitable to new requirements that come to light. The C shape is in any case to be deemed preferable in view of the simple construction with respect to other open sections.

The longitudinal members 2 can, advantageously from an economic viewpoint, be made of bent metal plate, easy to drill by virtue of the opening present even after bending.

The longitudinal members 2 with open section 3, the section and the material used being equal, are less rigid than the closed sections. They provide greater flexibility, more space and are more economical. The free spaces can be validly used for the passage of functional elements, cabling and are also useful for dampening vibrations.

Lacking facility of access, the longitudinal members can only be drilled with operations by means of shaving removal equipment.

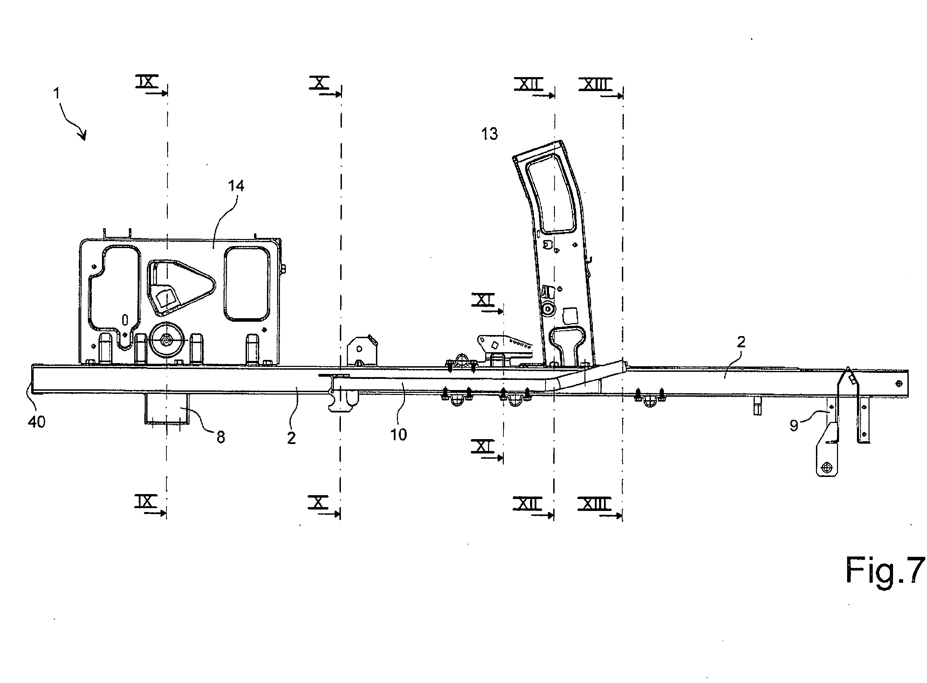

In figures 1 and 7 structural elements 6, 8, 9, 10, 13, 14 and 40 can be seen which are used both for transversal structural connection between the longitudinal members 2, and for fastening the functional units, not shown here. The functional units, by way of example, can be a motor, a forecarriage and a towing kit.

In particular, the structural elements 6, 8, 9, 10, 13, 14 and 40 chosen here are:
- a motor plate 6 at position 4 of a motor (not shown);
- two supports 8 at the transmission (not shown);
- a plate-forecarriage 9;
- a platform support 10 with cross element 50;
- a dashboard support 13;
- a seat support 14;
- a tow kit fastening 40.

The structural elements 6, 8, 9, 13, 14 and 40 are also normally made of metal plate. The structural elements 6, 8, 9, and 40 are fastened to the longitudinal members 2 by weldings 80 so as to close the open section 3 of the longitudinal members 2, thereby strengthening them in the corresponding closing area of the open section.

The plate-motor 6, the forecarriage plate 9, the supports 8 and the fastening 40, are welded to the longitudinal members 2, while the platform support 10, the seat support 14 and the dashboard support 13 are fastened directly to the longitudinal members 2 by screw means, preferably self-tapping screws.

The central frame 1 is made by means of two C-shaped longitudinal members 2 having holes and cut-offs 11 for the direct fastening of structural elements to the longitudinal members by means of screw.

Substantially, the lesser rigidity of the open longitudinal members 2 themselves compared to the closed ones is offset by welding and fastening structural elements to the longitudinal members 2 so as to close said opening of the longitudinal members 2 where required, the above economic advantage remaining of the manufacture of the open longitudinal members 2.

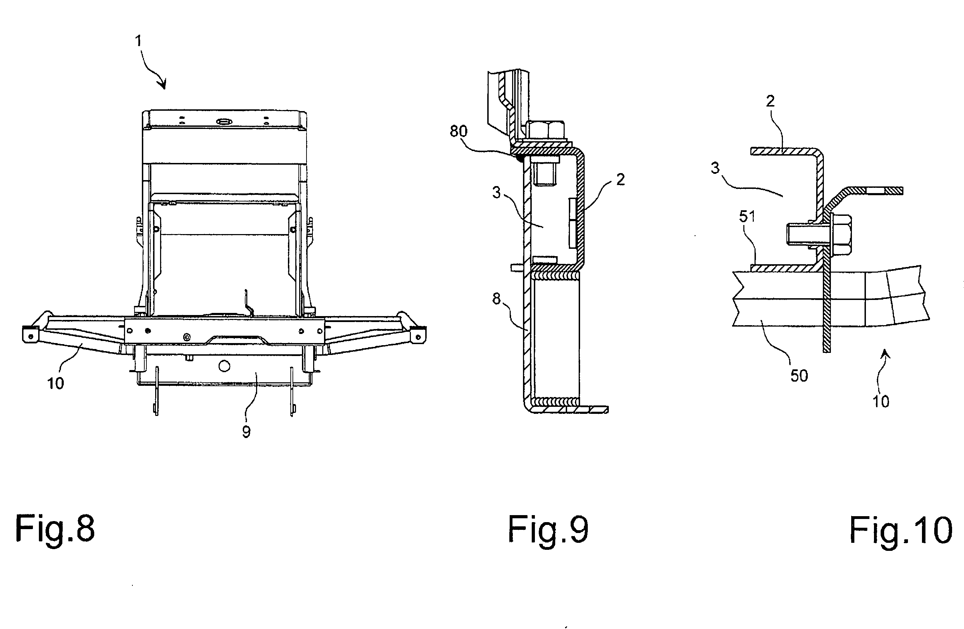

In particular, the platform support 10 is fastened at the front by screws to the longitudinal members and the posterior transversal element 50 supports at the bottom the inferior terminal fins 51 of the "C" as shown in detail in figure 10, joining them transversally.

The European type frame always envisages a number of supports welded to the longitudinal members which mediate the connection between the closed longitudinal members and the structural elements. This involves a considerable increase in the number of pieces to be welded and in the relevant cost.

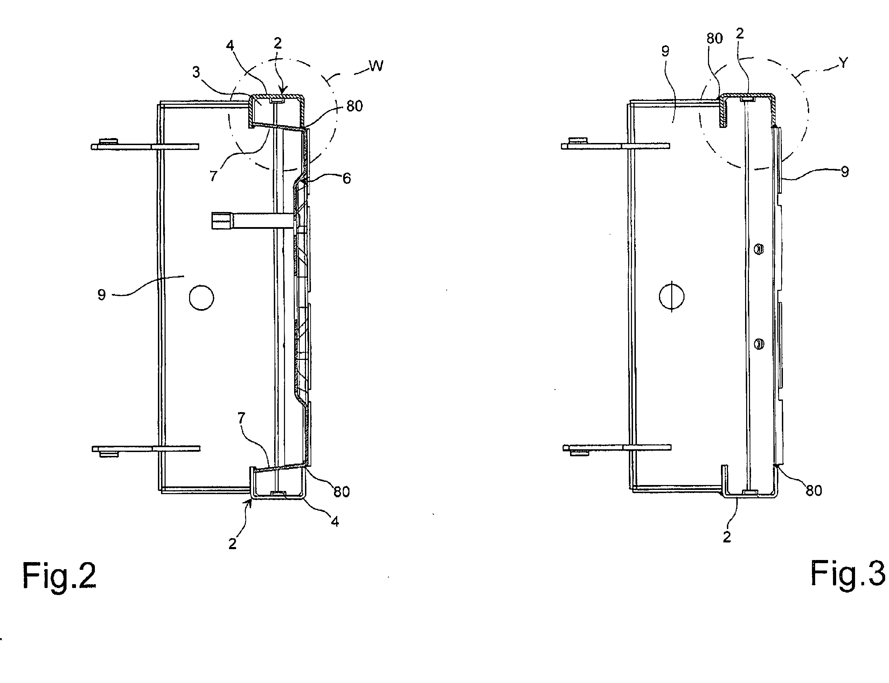

In particular, the plate-motor 6, for fastening the motor, is made of bent metal plate, in particular with two flaps 7. At the position 4 of the motor, the plate-motor 6 is fastened: each flap 7 is welded (figures 2 and 4) to the respective longitudinal member 2, closing the section 3 of the longitudinal members 2.

In the points of the longitudinal members 2 chosen to be left free, i.e., with open section, the longitudinal member 2 behaves like a vibration dampening element, e.g., of the motor and of the cutting plate.

The structural elements 6, 9, and 40 are welded so as to transversally join the longitudinal members 2, creating a closed stiffening cell. By cell is meant the plan combination of the longitudinal members 2 and of the transversal elements fastened to them without interruption from the structural point of view, This ensures better stiffness.

In particular, it can be seen in the figures 1, 7 and 9 that to the longitudinal members 2 are also fastened two supports 8, made of bent metal plate, for the wheel drive assembly, in particular welded, as can be appreciated in the figure 9. This way, the fastening of the supports 8 to the longitudinal members 2 closes the section 3 of the longitudinal members 2 (figure 9).

The platform support 10 is prevalently made of welded tubular sections, easy to make, passing transversally by means of the element 50 in the posterior area and connected (figure 10) to the longitudinal members 2 by means of self-tapping screws. It will be noticed that the support 10 does not close section 3 of the longitudinal member 2 at the front, because here the frame is already stiffened by the motor plate.

It will be recalled here briefly that the self-tapping screws used permit several screwing up and unscrewing operations, a particular diameter and shape of the hole having been defined, as well as the choice of the type of screw.

The embodiment shown in the drawings advantageously envisages the opening of the section turned inwards. The use is conceivable of longitudinal members with opening outwards, in the case of its being advantageous to use the outer space of the longitudinal members.

## Claims

1. Supporting frame (1) for tractor mower,
comprising two parallel longitudinal members (2) with open section (3) having a plurality of fastening through holes and cut-offs (11), and structural elements (6,8,9,10,13,14,40) with the function of transversal structural connection between the longitudinal members (2) and for fastening functional units,
**characterised in that** it comprises a plate-motor (6) made of bent metal plate with flaps (7) that are welded to the longitudinal members (2) so as to close the open section (3) of the longitudinal members (2).

2. Frame (1) according to claim 1, **characterised in that** it comprises two supports (8) for fastening the wheel drive in bent metal plate welded to the longitudinal members (2) so as to close the open section (3) of the longitudinal members (2).

3. Frame (1) according to any one of the preceding claims, **characterised in that** it comprises a forecarriage unit (9) welded to the longitudinal members (2) so as to close the open section (3) of the longitudinal members (2).

4. Frame (1) according to any one of the preceding claims, **characterised in that** it comprises a platform support (10) fastened crossways directly to the longitudinal members (2) by means of a screw connection, said support (10) comprising a transversal element on which the lower part of the longitudinal members rests.

5. Frame (1) according to any one of the preceding claims, **characterised in that** it comprises a dashboard support (13) fastened crossways directly to the longitudinal members (2) by means of a screw connection.

6. Frame (1) according to any one of the preceding claims, **characterised in that** it comprises a seat support (14) fastened crossways directly to the longitudinal members (2) by means of screw connection.

7. Frame (1) according to any one of the preceding claims, **characterised in that** it comprises longitudinal members with C-shaped open section.

8. Frame (1) according to any one of the preceding claims, **characterised in that** it comprises longitudinal members with open section turned inwards.

## Patentansprüche

1. Stützrahmen (1) für einen Mähtraktor, der umfasst:
zwei parallele Längsbauteile (2) mit einem offenen Bereich (3), der eine Mehrzahl an Befestigungsdurchgangsbohrungen und Gesenke (11) aufweist sowie Bauelemente (6, 8, 9, 10, 13, 14, 40) mit der Funktion einer baulichen Querverbindung zwischen den Längsbauteilen (2) und zum Befestigen von Funktionseinheiten, **dadurch gekennzeichnet, dass** er umfasst:
einen Scheibenmotor (6), der aus einer gebogenen Metallplatte mit Klappen (7) hergestellt ist, die an die Längsbauteile (2) geschweißt sind, um den offenen Bereich (3) der Längsbauteile (2) zu schließen.

2. Rahmen (1) nach Anspruch 1, **dadurch gekennzeichnet, dass** er zwei Halterungen (8) zum Befestigen des Radantriebs an den gebogenen Metallplatten umfasst, die an die Längsbauteile (2) geschweißt sind, um den offenen Bereich (3) der Längsbauteile (2)zu schließen.

3. Rahmen (1) nach einem der vorhergehenden Ansprüche, **dadurch gekennzeichnet, dass** er eine Vorderkarreneinheit (9) umfasst, die an die Längsbauteile (2) geschweißt sind, um den offenen Bereich (3) der Längsbauteile (2) zu schließen.

4. Rahmen (1) nach einem der vorhergehenden Ansprüche, **dadurch gekennzeichnet, dass** er eine Plattformstütze (10) umfasst, die quer direkt an die Längsbauteile (2) durch eine Schraubverbindung befestigt ist, wobei die Stütze (10) ein Querelement umfasst, auf welchem der untere Teil der Längsbauteile aufliegt.

5. Rahmen (1) nach einem der vorhergehenden Ansprüche, **dadurch gekennzeichnet, dass** er eine Armaturenbrettstütze (13) umfasst, die quer direkt an die Längsbauteile (2) durch eine Schraubverbindung befestigt ist.

6. Rahmen (1) nach einem der vorhergehenden Ansprüche, **dadurch gekennzeichnet, dass** er eine Sitzstütze (14) umfasst, die quer direkt an die Längsbauteile (2) durch eine Schraubverbindung befestigt ist.

7. Rahmen (1) nach einem der vorhergehenden Ansprüche, **dadurch gekennzeichnet, dass** er Längsbauteile mit einem C-förmigen offenen Bereich umfasst.

8. Rahmen (1) nach einem der vorhergehenden Ansprüche, **dadurch gekennzeichnet, dass** er Längsbauteile mit einem nach innen gerichteten offenen Bereich umfasst.

## Revendications

1. Châssis de support (1) pour une tondeuse autoportée comprenant deux éléments longitudinaux parallèles (2) avec une section ouverte (3) ayant une pluralité de trous et de découpes (11) traversants de fixation, et d'éléments structurels (6, 8, 9, 10, 13, 14, 40) ayant la fonction de raccord structurel transversal entre les éléments longitudinaux (2) et de fixation des unités fonctionnelles,
**caractérisé en ce qu'**il comprend une plaque-moteur (6) en tôle métallique pliée avec des rabats (7) qui sont soudés aux éléments longitudinaux (2) afin de fermer la section ouverte (3) des éléments longitudinaux (2).

2. Châssis (1) selon la revendication 1, **caractérisé en ce qu'**il comprend deux supports (8) pour la fixation de l'entraînement par roue dans la tôle métallique pliée soudée aux éléments longitudinaux (2) afin de fermer la section ouverte (3) des éléments longitudinaux (2).

3. Châssis (1) selon l'une quelconque des revendications précédentes, **caractérisé en ce qu'**il comprend une unité de chariot avant (9) soudée aux éléments longitudinaux (2) afin de fermer la section ouverte (3) des éléments longitudinaux (2).

4. Châssis (1) selon l'une quelconque des revendications précédentes, **caractérisé en ce qu'**il comprend un support de plateforme (10) fixé transversalement directement sur les éléments longitudinaux (2) au moyen d'un raccordement à vis, ledit support (10) comprenant un élément transversal sur lequel la partie inférieure des éléments longitudinaux repose.

5. Châssis (1) selon l'une quelconque des revendications précédentes, **caractérisé en ce qu'**il comprend un support de tableau de bord (13) fixé transversalement directement sur les éléments longitudinaux (2) au moyen d'un raccordement à vis.

6. Châssis (1) selon l'une quelconque des revendications précédentes, **caractérisé en ce qu'**il comprend un support de siège (14) fixé transversalement directement sur les éléments longitudinaux (2) au moyen d'un raccordement à vis.

7. Châssis (1) selon l'une quelconque des revendications précédentes, **caractérisé en ce qu'**il comprend des éléments longitudinaux avec une section ouverte en forme de C.

8. Châssis (1) selon l'une quelconque des revendications précédentes, **caractérisé en ce qu'**il comprend des éléments longitudinaux avec la section ouverte orientée vers l'intérieur.
